# EUROPÄISCHE PATENTANMELDUNG

(11) **EP 4 520 691 A1**
(43) Veröffentlichungstag der Anmeldung: **12.03.2025**
(21) Anmeldenummer: 24198543.1
(22) Anmeldetag: 05.09.2024
(51) Int. Cl.: B65G 35/00, B29C 49/42, B65G 43/08, B65G 47/256

(54) **VEREINZELUNGSVORRICHTUNG, BLASANORDNUNG SOWIE VERFAHREN ZUM BETRIEB**

(30) Priorität: 06.09.2023 DE 102023123994
(71) Anmelder: KHS GmbH, 44143 Dortmund (DE)
(72) Erfinder: Holler, Dieter, 44143 Dortmund (DE); Heller, Alexander, 44143 Dortmund (DE)
(74) Vertreter: Andrejewski - Honke Patent- und Rechtsanwälte Partnerschaft mbB

(57) **Zusammenfassung**

Die Erfindung betrifft eine Vereinzelungsvorrichtung zum Vereinzeln von Vorformlingen (1) mit einer entlang einer Förderrichtung angeordneten Fördergasse (2) wobei zur Bildung zumindest eines Förderabschnittes zwei gegenläufig rotierbar eingerichtete Förderrollen (3, 4) mit jeweils parallel zur Förderrichtung (F) angeordneten Rollenachsen (D) zueinander beabstandet sind und mit einer Lagendetektionseinrichtung (12) zum Erkennen von fehlausgerichteten Vorformlingen (1). Erfindungsgemäß weist die Lagendetektionseinrichtung (12) einen mit einer Bewegungskomponente in Förderrichtung verschwenkbaren Hebelarm (7) auf, welcher zumindest mit einem Endabschnitt (10) in die Fördergasse (2) eingreift.

## Beschreibung

Die vorliegende Erfindung betrifft eine Vereinzelungsvorrichtung zum Vereinzeln von Vorformlingen mit einer entlang einer Förderrichtung angeordneten Fördergasse, wobei zur Bildung zumindest eines Förderabschnittes zwei gegenläufig rotierbar eingerichtete Fördererrollen mit jeweils parallel zur Förderrichtung angeordneten Rollenachsen zueinander beabstandet sind und mit einer Lagendetektionseinrichtung zum Erkennen von fehlausgerichteten Vorformlingen.

Derartige Vereinzelungsvorrichtung sind grundsätzlich aus dem Stand der Technik bekannt und werden üblicherweise auch als Rollensortierer bezeichnet, da durch die Drehbewegung der Fördererrollen einerseits eine Vereinzelung und andererseits eine Sortierung der Vorformlinge im Zuge der Bewegung entlang des Förderabschnittes erfolgen kann.

Die Erfindung bezieht sich hierbei insbesondere auf Vereinzelungsvorrichtungen aus dem Bereich der Getränkeindustrie, wobei es sich bei den Vorformlingen um sogenannte Preforms handelt, welcher in einer Blasmaschine durch plastische Verformung zu Getränkebehältern ausgebildet werden. Entsprechend bestehen die Vorformlinge aus einem thermoplastischen Material, insbesondere aus Polyethylenterephthalat (PET), sodass diese in geeigneter Art und Weise erwärmt, aufgeweicht und sodann durch Beaufschlagung mit einem Innendruck zu einem Behälter, insbesondere einer Getränkeflasche, aufgeweitet werden können.

Um einen unterbrechungsfreien Herstellungsprozess in der Blasmaschine gewährleisten zu können, muss diese kontinuierlich mit Vorformlingen beschickt werden. Diese liegen üblicherweise vorgefertigt innerhalb eines Sammelbehälters vor und werden sodann über einen sogenannten Steigförderer entnommen, welcher die Vorformlinge entlang einer vertikalen Richtung nach oben transportiert. Die Vorformlinge fallen von oben in die Fördergasse der Vereinzelungsvorrichtung hinein, wobei die Fördergasse hinsichtlich der Breite durch den Abstand der beiden Fördererrollen zueinander definiert wird.

Hierbei ist zu beachten, dass die Vorformlinge in einem vereinzelten und sortierten Zustand mit ihrem sogenannten Neckring zwischen den Fördererrollen hängen bleiben und durch die gegenläufige Rotation der Fördererrollen kontinuierlich nach oben geworfen werden. Entsprechend weisen die Fördererrollen an der Fördergasse eine nach oben zeigende Drehrichtung auf. Durch diese Wurfbewegung richten sich die Vorformlinge derart aus, dass deren Öffnung nach oben zeigt, während der später in der Blasmaschine auszuformende Bereich der Vorformlinge zwischen den Fördererrollen in der Fördergasse angeordnet ist.

Entsprechende Ausgestaltungen sind beispielsweise aus der EP 2 892 661 A1 oder aus der WO 2011/0692681 A1 bekannt. In diesen Druckschriften wird sich darüber hinaus auch mit der Problematik von schräggestellten Vorformlingen befasst, welche sich nicht in geeigneter Art und Weise in die Fördergasse einreihen lassen. Dies ist insbesondere dann problematisch, wenn eine hohe Anzahl von Vorformlingen in die Vereinzelungsvorrichtung eingebracht wird und diese somit dicht aneinander anliegen. Durch die Rotation der Fördererrollen können dann gegebenenfalls nicht alle Vorformlinge in der Fördergasse eingereiht werden.

Die EP 2 892 661 A1 schlägt in diesem Zusammenhang vor, die fehlausgerichteten Vorformlinge durch Ausübung eines mechanischen Stoßes auszurichten und hierdurch in die Fördergasse einzureihen. Hierzu ist ein Rotationskörper mit einem sternförmigen Querschnitt vorgesehen, wobei die vorstehenden Abschnitte durch Rotation an die Vorformlinge anschlagen.

Darüber hinaus sind aus dem Stand der Technik auch Vorrichtungen bekannt, bei denen die Vorformlinge über einen Luftstoß und/oder durch einen mechanischen Auswerfer aus der Fördergasse ausgebracht werden können.

Die vorstehend beschriebenen Vereinzelungsvorrichtungen haben sich grundsätzlich bewährt. Allerdings hat sich auch gezeigt, dass es bei Lösungen, welche das Auswerfen von Vorformlingen vorsehen, eine sichere und fehlerunauffällige Lösung zum Detektieren fehlausgerichteter Vorformlinge erforderlich ist.

Dies erfolgt üblicherweise mithilfe von Sensoren, z. B. Kamerasystemen, welche in die Transportgasse hineinblicken und sodann über eine entsprechende Bildauswertung etwaige Fehlausrichtungen von Vorformlingen erkennen. Wenngleich eine derartige Lösung grundsätzlich praxistauglich ist, so ist sie dennoch mit einem gewissen Fehler verbunden, da gerade im Falle von Kamerasystemen die Bildauswertung eine gewisse Zeitspanne benötigt, sodass eventuell nicht rechtzeitig fehlausgerichtete Vorformlinge erkannt und ausgeworfen werden können. Sofern dann diese Vorformlinge in den Bereich der Zuführung zur Blasmaschine gelangen, kann dies zu Störungen im Betriebsablauf oder sogar zu Beschädigungen an der Blasmaschine führen.

Vor diesem Hintergrund liegt der Erfindung die Aufgabe zugrunde, eine Vereinzelungsvorrichtung vorzusehen, welche eine sichere und fehlerunauffällige Detektion von fehlausgerichteten Vorformlingen ermöglicht.

Gegenstand und Lösung dieser Aufgabe ist eine Vereinzelungsvorrichtung gemäß Patentanspruch 1. Dementsprechend ist vorgesehen, dass die Lagendetektionseinrichtung einen mit einer Bewegungskomponente in Förderrichtung verschwenkbaren Hebelarm aufweist, welcher zumindest mit einem Endabschnitt in einer Detektionsstellung in die Fördergasse eingreift.

Hierbei geht die Erfindung von der Erkenntnis aus, dass fehlausgerichtete Vorformlinge dadurch detektiert werden können, dass diese zum Beispiel mit einem Neckring an einen Endabschnitt des Hebelarmes anschlagen und diesen sodann im Zuge der Bewegung in Förderrichtung verschwenken. Diese Schwenkbewegung kann dann unmittelbar in verschiedener Art und Weise dazu verwendet werden, um ein Signal zu erzeugen, welches Informationen für das Vorliegen eines fehlausgerichteten Vorformlings enthält.

Eine solche Ausgestaltung hat sich als besonders fehlerunanfällig erwiesen, da in der Regel die fehlausgerichteten Vorformlinge entlang ihrer Länge im Wesentlichen parallel zur Förderrichtung angeordnet sind, sodass sich der Neckring in Vertikalrichtung nach oben erstreckt und somit leicht von den Endabschnitten erfasst werden kann. Sofern die Vorformlinge eine Sollausrichtung aufweisen, bei der der Neckring an beiden Fördererrollen anliegt, ergibt sich eine im Vergleich dazu kürzere Erstreckung in vertikaler Richtung, sodass die Vorformlinge an dem Hebelarm bzw. an den Endabschnitten entlanggleiten und somit keine Auswirkungen auf das Verschwenken des Hebelarms haben.

Auf Basis der erfindungsgemäßen Lösung ist es daher nicht erforderlich, eine aufwendige Bildauswertung durchzuführen, da die Fehlausrichtung der Vorformlinge allein über die Kenntnis der vertikalen Erstreckungen zwischen Sollausrichtung und Fehlausrichtungen bewirkt wird. Selbstverständlich liegt es aber im Rahmen der Erfindung, auch weiterhin geeignete Kamerasysteme ergänzend vorzusehen, sodass eine redundante Überwachung gewährleistet wird.

Eine bevorzugte Weiterbildung der Erfindung sieht vor, dass die Lagendetektionseinrichtung einen rotierbar an dem Hebelarm angeordneten Zahnkranz mit einer Vielzahl von Abstandszähnen aufweist, wobei der Endabschnitt jeweils an den Abstandszähnen gebildet ist. Hierbei weist der Zahnkranz insbesondere eine Rotationsachse auf, welche parallel zur Schwenkachse des Hebelarms angeordnet ist.

Gemäß einer solchen Ausgestaltung greifen die Abstandszähne im Falle von sollausgerichteten Vorformlingen in den Behälterinnenraum der Vorformlinge hinein, sodass die Bewegung der Vorformlinge entlang der Förderrichtung eine Rotation des Zahnkranzes bewirkt. Entsprechend sind die Endabschnitte an den Abstandszähnen üblicherweise in einem Abstand zueinander angeordnet, welcher dem Abstand von zwei aufeinanderfolgenden Vorformlingen entspricht, wobei sich hierbei stets auf die Behälterachsen bezogen wird. Im Falle einer Fehlausrichtung ist es dann nicht mehr möglich, dass die Abstandszähne in die Vorformlinge eingreifen, sodass entsprechend auch eine Rotation des Zahnkranzes blockiert wird. Durch die mechanische Kollision zwischen Vorformlingen und Hebelarm, erfolgt ein Ausschwenken des Hebelarmes, über den dann die Fehlausrichtung detektiert werden kann.

Ausgehend von üblichen Größen der Preforms ist entsprechend eine Ausgestaltung bevorzugt, bei der die Abstandszähne endseitig in einer Teilung zwischen 25 und 35 mm angeordnet sind. Hierbei bezieht sich die Teilung auf das Bogenmaß zweier aufeinander folgender Abstandszähne an den Endabschnitten.

Gemäß einer besonders bevorzugten Weiterbildung der Erfindung ist der Hebelarm zwischen einer Normalstellung und der Detektionsstellung in einem Schwenkwinkel zwischen 5° und 20° verschwenkbar. In diesem Zusammenhang ist mit einer Normalstellung die Stellung des Hebelarmes gemeint, welche der Hebelarm im Falle von sollausgerichteten Vorformlingen einnimmt. Ausgehend hiervon wird der Hebelarm dann durch Verschwenken in die Detektionsstellung überführt. Während diese Überführung allein durch die mechanische Kollision der Endabschnitte mit dem Vorformling erfolgt, kann ein Zurückschwenken in die Normalstellung allein durch die Schwerkraft des Hebelarms erfolgen.

Alternativ ist es auch möglich eine Federanordnung vorzusehen, welche ein Zurückschwenken von der Detektionsstellung in die Normalstellung ermöglicht. Der Winkel zwischen der Normalstellung und der Detektionsstellung ist hierbei so bemessen, dass in einem ausreichenden Maße die Fehlausrichtung eines Vorformlings erfasst werden kann und zugleich der Hebelarm möglichst schnell zurück in eine Normalstellung überführt werden kann. Hierdurch soll insbesondere sichergestellt werden, dass auch im Falle unmittelbar aneinander angrenzender fehlausgerichteter Vorformlinge beide zuverlässig detektiert werden können und gegebenenfalls eine Ausschleusung beider Vorformlinge bewirkt werden kann.

Darüber hinaus hat sich in der Praxis auch gezeigt, dass eine gewisse Schrägstellung des Hebelarms gegenüber einer durch die Rollenachsen gebildeten Ebene bevorzugt ist. Mit dieser Schrägstellung ist gemeint, dass der Hebelarm in Richtung einer der Fördererrollen geneigt ist, sodass sich ein Anstellwinkel ausbildet, welche bevorzugt zwischen 65° und 85° beträgt.

Eine besonders bevorzugte Ausgestaltung der Erfindung sieht ferner vor, dass die Lagendetektionseinrichtung eine Sensoranordnung aufweist, welche dazu eingerichtet ist, den Hebelarm in der Detektionsstellung zu detektieren. Entsprechend ist die Sensoranordnung dazu vorgesehen, zwischen einer Normalstellung und der Detektionsstellung zu unterscheiden. Darüber hinaus kann dann in der Detektionsstellung ein Ausgabesignal erzeugt werden, wobei auf Basis dieses Ausgangssignals Handlungen eingeleitet werden können, welche einer Fehlstellung des entsprechenden Vorformlings entgegenwirken.

Diese Handlung kann beispielsweise darin bestehen, dass aktiv eine Überführung in eine Sollausrichtung bewirkt wird. Alternativ ist es aber auch möglich, den Vorformling auszuschleusen. In einer besonders einfachen Ausgestaltung reicht es allerdings auch aus, wenn ausschließlich ein Ausgabesignal zu Informationszwecken ausgegeben wird, sodass dann auf Basis dieser Information manuell entschieden werden kann, wie dieser Situation begegnet werden soll.

Grundsätzlich können verschiedene Sensoranordnungen vorgesehen sein. Hierbei ist es beispielsweise ausreichend, wenn ein Anschlagsensor vorgesehen ist, welcher ein Ausgabesignal erzeugt, sobald der Hebelarm an diesem anschlägt. Eine solche Ausgestaltung ist besonders einfach und kostengünstig vorzusehen, wobei diese allerdings den Nachteil aufweist, dass ein Ausgabesignal tatsächliches erst dann erzeugt wird, wenn der Hebelarm vollständig in die Detektionsstellung überführt wurde. Dies kann allerdings zugleich bedeuten, dass in einigen Fällen, in denen der Hebelarm nicht vollständig verschwenkt wurde, kein Signal erzeugt wird und entsprechend keine Handlungen eingeleitet werden können.

Vor diesem Hintergrund hat sich eine Ausgestaltung als besonders geeignet erwiesen, bei der die Sensoranordnung zumindest eine Lichtstrahlenquelle und einen in einem Strahlengang angeordneten Lichtsensor aufweist. Entsprechend erzeugt die Lichtstrahlenquelle einen Lichtstrahl, welcher von dem Lichtsensor erfasst werden kann. Hierbei ist es beispielsweise möglich, die Lichtstrahlenquelle auf einer Seite der Fördergasse und den Lichtsensor auf einer gegenüberliegenden Seite der Fördergasse anzuordnen. Alternativ ist es auch möglich, sowohl die Lichtstrahlenquelle als auch den Lichtsensor in einer Baueinheit zu vereinigen, welche auf einer Seite der Fördergasse angeordnet ist und wobei auf der gegenüberliegenden Seite eine Reflektoreinheit vorgesehen ist, welche den Lichtstrahl zurück reflektiert. In beiden Fällen erfolgt dann zwischen der Normalstellung und der Detektionsstellung eine Unterbrechung des Strahlenganges, wobei sich zwei unterschiedliche Alternativen ergeben.

Gemäß einer ersten Alternative ist der Hebelarm ausschließlich in der Normalstellung in dem Strahlengang angeordnet. Entsprechend wird erst durch Überführen in die Detektionsstellung der Strahlengang freigegeben und der Lichtsensor erfasst ein Signal, welches für einen fehlzugeordneten Vorformling spricht. Alternativ ist es auch möglich, dass der Hebelarm ausschließlich in der Detektionsstellung in dem Strahlengang angeordnet ist, sodass im Normalzustand stets ein Signal von dem Lichtsensor erfasst wird. Sobald dieses Signal unterbrochen wird, spricht dies für einen fehlangeordneten Vorformling, sodass dann entsprechend ein Ausgabesignal erzeugt werden kann.

Eine Weiterbildung der Erfindung sieht darüber hinaus vor, dass in der Transportgasse zumindest eine in Förderrichtung hinter der Lagendetektionseinrichtung angeordnete Auswerfeinrichtung zum Auswerfen fehlgelagerter Vorformlinge vorgesehen ist. Mithilfe einer solchen Auswerfeinrichtung ist es möglich, fehlausgerichtete Vorformlinge auszuwerfen. Hierbei kann es sich beispielsweise um einen manuellen Auswerfer handeln, welcher eine Bewegung quer, insbesondere senkrecht, zur Förderrichtung bewirkt und dementsprechend den Vorformling seitlich auswirft.

Eine bevorzugte Ausgestaltung sieht jedoch vor, dass zumindest eine Auswerfeinrichtung eine Blasdüse ist oder bevorzugt durch eine Blasdüse gebildet ist. Diese Blasdüse ist dann dazu eingerichtet, die Behälter quer zur Transportrichtung durch einen Luftstoß auszuwerfen. Gegenüber einem mechanischen Auswerfen hat eine solche Ausgestaltung den Vorteil, dass kein Zurückschwenken oder Zurückziehen erforderlich ist, sodass nur für einen kurzen Zeitraum in den Transport der Vorformlinge eingegriffen werden kann.

Ausgehend von einer solchen Ausgestaltung ist es dann möglich, die Lagendetektionseinrichtung und die Auswerfeinrichtung signalwirkend mit einer Steuervorrichtung, insbesondere einer gemeinsamen Steuervorrichtung, zu verbinden. Hierdurch kann die Auswerfeinrichtung auf Basis des von der Lagendetektionsausrichtung erzeugten Ausgabesignals einen fehlangeordneten Vorformling auswerfen. Entsprechend erzeugt die Lagendetektionseinrichtung im Falle eines fehlangeordneten Vorformlings ein Ausgabesignal, welches an die Steuervorrichtung übermittelt wird. Sobald ein solches Ausgabesignal innerhalb der Steuervorrichtung eingeht, kann dann ein Eingabesignal erzeugt und an die Auswerfeinheit übermittelt werden, welches entweder einen mechanischen Auswerfer oder eine Blasdüse ansteuert und den entsprechenden fehlangeordneten Vorformling auswirft.

Gegenstand der Erfindung ist darüber hinaus auch eine Blasanordnung mit einer Blasmaschine zum Blasumformen von Vorformlingen zu Behältern, insbesondere Getränkebehältern, und einer der Blasmaschine vorgeschalteten Transportvorrichtung, wobei die Transportvorrichtung eine erfindungsgemäße Vereinzelungsvorrichtung aufweist. Bei der Blasmaschine handelt es sich insbesondere um eine Streck-Blasmaschine, bei welcher ein Blasdorn in die Vorformlinge eingeführt wird und eine gewisse Längung in axialer Richtung ermöglicht.

Davon ausgehend kann die Vereinzelungsvorrichtung an einen Steigförderer anschließen. Eine solche Ausgestaltung wurde bereits im Zusammenhang mit den Erläuterungen zum Stand der Technik eingehend beschrieben.

Entsprechend fördert der Steigförderer die Vorformlinge aus einem Sammelbehälter in einer vertikalen Richtung und wirft dann diese in einem Einführabschnitt auf die Vereinzelungsvorrichtung bzw. in die Transportgasse der Vereinzelungsvorrichtung.

Gegenstand der Erfindung ist ferner ein Verfahren nach Patentanspruch 14 zum Betreiben einer erfindungsgemäßen Vereinzelungsvorrichtung, wobei ein Vorformling zugeführt und im Zuge eines Transports entlang der Förderrichtung in der Fördergasse ausgerichtet wird. Im Falle einer Fehlausrichtung des Vorformlings wird diese durch die Lagendetektionseinrichtung dadurch detektiert, dass ein Hebelarm verschwenkt wird.

Bevorzugt wird der Hebelarm durch Anschlagen des Vorformlings an einem an dem Hebelarm angeordneten Endabschnitt bewirkt. Diese Funktionsweise wurde bereits zuvor im Zusammenhang mit der Vereinzelungsvorrichtung eingehend erläutert. Der Vorformling schlägt insbesondere mit dem Neckring an den Endabschnitt an und bewegt hierdurch den Hebelarm in Förderrichtung weiter, wodurch ein Verschwenken bewirkt wird.

Ausgehend hiervon hat sich eine Ausgestaltung des Verfahrens als besonders vorteilhaft erwiesen, bei der der Endabschnitt jeweils an Abstandszähnen eines rotierbaren Hebelarm angeordnete Zahnkranz gebildet sind, welche im Falle einer Sollausrichtung in den Vorformling eingreift und im Falle einer Fehlausrichtung an eine Außenwandung des Vorformlings anschlagen. Im Fall einer Sollausrichtung können also die Abstandszähne in den Vorformling eingreifen und eine Rotation des Zahnkranzes bewirken. Erst bei einer Fehlausrichtung ist eine solche Anordnung der Abstandszähne innerhalb der Vorformlinge nicht länger möglich, sodass diese an eine Außenwandung anschlagen und wie bereits zuvor erläutert ein Verschwenken des Hebelarmes bewirken.

Darüber hinaus kann der Hebelarm im Zuge des Verschwenkens ein Strahlengang der Sensoranordnung blockieren oder freigeben, wobei die Sensoranordnung im Zuge dessen ein Signal erzeugt. Auch hier wird erneut auf die zwei verschiedenen Möglichkeiten hingewiesen, wobei das Signal bzw. das Ausgabesignal entweder im Falle des Freigebens des Strahlengangs oder im Falle des Blockierens erzeugt wird.

Auf Basis des erzeugten Signals kann dann der Vorformling ausgeworfen werden, wobei dies insbesondere durch Ausblasen erfolgt.

Im Folgenden wird die Erfindung anhand eines Ausführungsbeispiels näher erläutert. Die Figuren zeigen:
- Fig. 1: eine isometrische Darstellung einer erfindungsgemäßen Vereinzelungsvorrichtung in Normalstellung
- Fig. 2: eine seitliche Ansicht der Vereinzelungsvorrichtung gemäß Fig. 1
- Fig. 3: eine isometrische Darstellung der Vereinzelungsvorrichtung gemäß Fig. 1 in einer Detektionsstellung
- Fig. 4: die Vereinzelungsvorrichtung gemäß Fig. 3 nach dem ein fehlausgerichteter Vorformling detektiert wurde

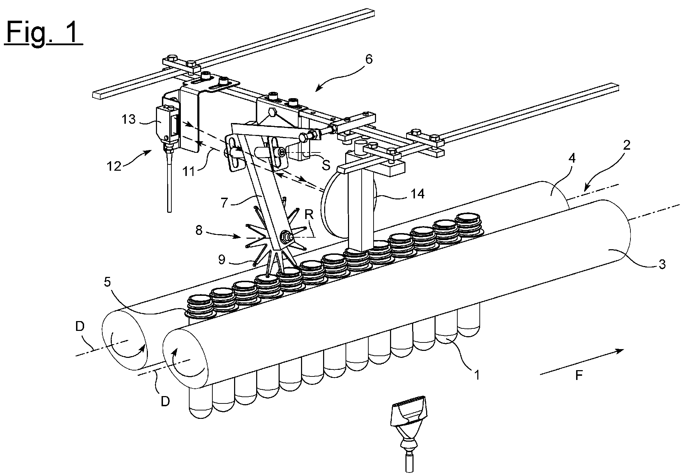

Die Fig. 1 zeigt eine erfindungsgemäße Vereinzelungsvorrichtung zum Vereinzeln von Vorformlingen 1 mit einer entlang einer Förderrichtung F angeordneten Fördergasse 2. Die Fördergasse 2 wird aus zwei gegenläufig rotierbar eingerichteten Förderrollen 3, 4 gebildet, wobei die Rollenachsen D der Förderrollen 3, 4 parallel zueinander angeordnet sind und wobei der Abstand der Förderrollen 3, 4 bzw. der Rollenachsen D so zueinander bestimmt ist, dass die Vorformlinge 1 in einer Sollausrichtung gemäß der Fig. 1 mit einem Neckring 5 zwischen den Fördererrollen 3, 4 aufliegen.

Die gegenläufige Rotation der Fördererrollen 3, 4 ist so eingerichtet, dass die Vorformlinge 1 zwischen den Fördererrollen 3, 4 kontinuierlich nach oben geworfen werden, sodass diese sich hierdurch ausrichten und hintereinander innerhalb der Fördergasse 2 einreihen.

Allerdings ist es gerade bei hohen Durchsätzen nicht vermeidbar, dass einzelne Vorformlinge 1 eine Fehlausrichtung einnehmen, was gerade in nachgeschalteten Anlagenkomponenten zu Problemen führen kann. Vor diesem Hintergrund ist es zwingend erforderlich, fehlausgerichtete Vorformlinge 1 zu detektieren und diese anschließend aktiv in eine Sollausrichtung zu überführen oder auszuschleusen.

Hierzu sieht die Vereinzelungsvorrichtung gemäß der Fig. 1 eine Lagendetektionseinrichtung 6 vor. Diese Lagendetektionseinrichtung 6 weist wiederum einen Hebelarm 7 auf, welcher mit einer Bewegungskomponente in Förderrichtung F verschwenkbar ausgebildet ist. Entsprechend ist dieser Hebelarm 7 um eine Schwenkachse S verschwenkbar, welche senkrecht zu den Rollenachsen D und damit auch zur Förderrichtung F angeordnet ist.

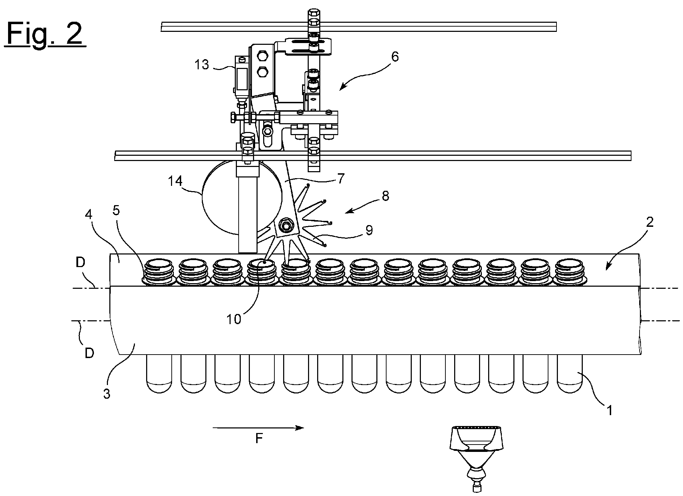

Darüber hinaus fällt insbesondere in einer vergleichenden Ansicht mit der Fig. 2 auf, dass der Hebelarm 7 einen rotierbaren Zahnkranz 8 mit einer Vielzahl von Abstandszähnen 9 aufweist, welche mit einem Endabschnitt 10 in die Fördergasse 2 bzw. im Falle einer Sollausrichtung der Vorformlinge 1 in den Behälterinnenraum der Vorformlinge 1 eingreifen.

Dies hat zur Folge, dass die in Förderrichtung F bewegten Vorformlinge 1 den Zahnkranz 8 rotierbar antreiben, da diese stets mit einer Wandung an die Endabschnitte 10 der Abstandszähne 9 anschlagen, wobei die Teilung der Abstandszähne 9 so ausgewählt ist, dass diese stets in den Behälterinnenraum zweier hintereinander angeordneter Vorformlinge 1 eingreifen können.

Eine solche Ausgestaltung hat zur Folge, dass durch den Transport der Vorformlinge 1 lediglich eine Rotation des Zahnkranzes 8 entlang einer Rotationsachse R erfolgt, wobei die Rotationsachse R parallel zur Schwenkachse S angeordnet ist. Durch die Rotation des Zahnkranzes 8 wird ein Verschwenken des Hebelarmes 7 verhindert, sodass bei ausschließlich sollausgerichteten Vorformlingen 1 ein Strahlengang 11 ununterbrochen vorliegt. Dieser Strahlengang 11 ist Teil einer Sensoranordnung 12, welche aus einem in einer gemeinsamen Baueinheit 13 angeordneten Lichtstrahlenquelle und Lichtsensor besteht. Die Lichtstrahlenquelle sendet ein Lichtsignal aus, welches von einem Reflektor 14 reflektiert und sodann von dem Lichtsensor erfasst wird. Sofern der Strahlengang 11 von dem Lichtsensor erfasst wird, kann daraus geschlossen werden, dass die Vorformlinge 1 sollausgerichtet sind.

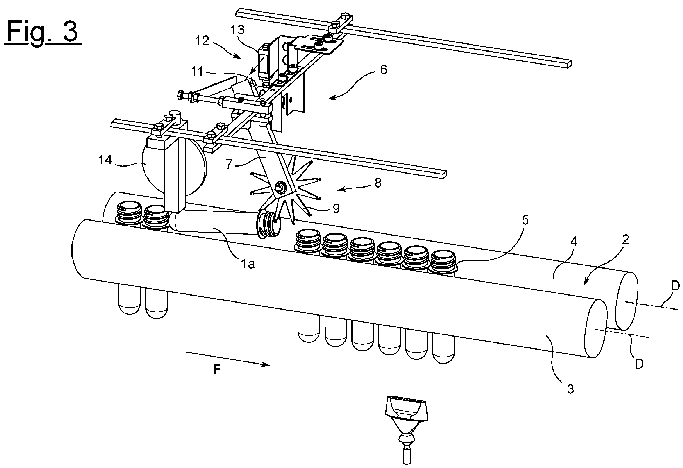

Gemäß der Fig. 3 ist nunmehr ein fehlausgerichteter Vorformling 1a vorgesehen, wobei dieser fehlausgerichtete Vorformling 1a eine Rotation des Zahnkranzes 8 verhindert, da die Abstandszähne 9 nicht länger unterbrechungsfrei in den Behälterinnenraum hintereinander angeordneter Vorformlinge 1 eingreifen können. Hierdurch wird ein Verschwenken des Hebelarmes 7 bewegt, wodurch der Strahlengang 11 unterbrochen wird. Entsprechend erfasst der Lichtsensor kein Signal mehr, sodass dann die Sensoranordnung 12 ein Ausgangssignal ausgibt, welches beispielsweise in einer nicht näher dargestellten Steuerungsvorrichtung ausgewertet werden kann und wobei darauf basierend entsprechende Maßnahmen eingeleitet werden können.

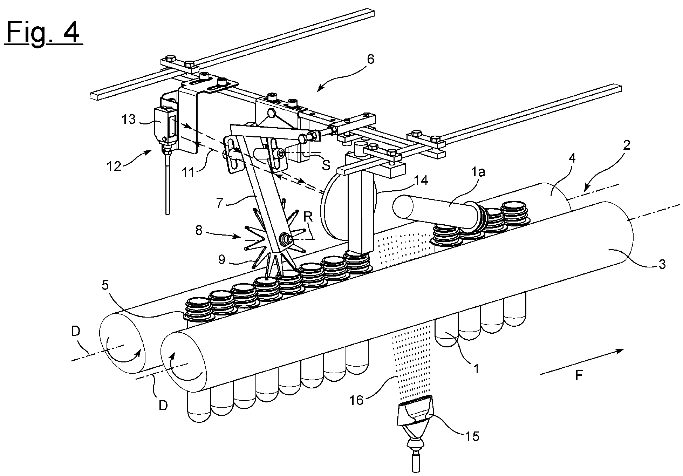

Eine exemplarische Maßnahme ist beispielsweise in der Fig. 4 dargestellt, wobei eine Blasdüse 15 einen Luftstrom 16 erzeugt, welcher den fehlausgerichteten Vorformlingen 1a quer zur Förderrichtung F ausstößt.

### Bezugszeichenliste

- 1, 1a: Vorformling
- 2: Fördergasse
- 3, 4: Förderrollen
- 5: Neckring
- 6: Lagendetektionseinrichtung
- 7: Hebelarm
- 8: Zahnkranz
- 9: Abstandszähne
- 10: Endabschnitt
- 11: Strahlengang
- 12: Sensoranordnung
- 13: Baueinheit
- 14: Reflektor
- F: Förderrichtung
- D: Rollenachsen
- S: Schwenkachse
- R: Rotationsachse

## Patentansprüche

1. Vereinzelungsvorrichtung zum Vereinzeln von Vorformlingen (1) mit einer entlang einer Förderrichtung angeordneten Fördergasse (2) wobei zur Bildung zumindest eines Förderabschnittes zwei gegenläufig rotierbar eingerichtete Förderrollen (3, 4) mit jeweils parallel zur Förderrichtung (F) angeordneten Rollenachsen (D) zueinander beabstandet sind und mit einer Lagendetektionseinrichtung (6) zum Erkennen von fehlausgerichteten Vorformlingen (1, 1a),
**dadurch gekennzeichnet, dass**
die Lagendetektionseinrichtung (6) einen mit einer Bewegungskomponente in Förderrichtung (F) verschwenkbaren Hebelarm (7) aufweist, welcher zumindest mit einem Endabschnitt (10) in die Fördergasse (2) eingreift.

2. Vereinzelungsvorrichtung nach Anspruch 1, **dadurch gekennzeichnet, dass** die Lagendetektionseinrichtung (6) einen rotierbar an dem Hebelarm (7) angeordneten Zahnkranz (8) mit einer Vielzahl von Abstandszähnen (9) aufweist, wobei der Endabschnitt (10) jeweils an den Abstandszähnen (9) gebildet ist.

3. Vereinzelungsvorrichtung nach Anspruch 2, **dadurch gekennzeichnet, dass** die Abstandszähne (9) endseitig in einer Teilung zwischen 25 und 35 mm angeordnet sind.

4. Vereinzelungsvorrichtung nach einem der vorangegangenen Ansprüche, **dadurch gekennzeichnet, dass** der Hebelarm (7) zwischen einer Normalstellung und der Detektionsstellung in einem Schwenkwinkel (S) zwischen 5° und 20° verschwenkbar ist.

5. Vereinzelungsvorrichtung nach einem der vorangegangenen Ansprüche, **dadurch gekennzeichnet, dass** der Hebelarm (7) unter einem Anstellwinkel gegenüber einer durch die Rollenachsen (D) gebildeten Ebene in Richtung einer der Rollenachsen (D) angeordnet ist, wobei der Anstellwinkel zwischen 65° und 85° beträgt.

6. Vereinzelungsvorrichtung nach einem der vorangegangenen Ansprüche, **dadurch gekennzeichnet, dass** die Lagendetektionseinrichtung (6) eine Sensoranordnung (12) aufweist, welche dazu eingerichtet ist, den Hebelarm (7) in der Detektionsstellung zu detektieren.

7. Vereinzelungsvorrichtung nach Anspruch 6, **dadurch gekennzeichnet, dass** die Sensoranordnung (12) zumindest eine Lichtstrahlenquelle und eine in einem Strahlengang (11) angeordneten Lichtsensor aufweist.

8. Vereinzelungsvorrichtung nach Anspruch 7, **dadurch gekennzeichnet, dass** der Hebelarm (7) ausschließlich in der Normalstellung oder in der Detektionsstellung in dem Strahlengang (11) angeordnet ist.

9. Vereinzelungsvorrichtung nach einem der vorangegangenen Ansprüche, **dadurch gekennzeichnet, dass** der Fördergasse (2) zumindest eine in Förderrichtung (F) hinter der Lagendetektionseinrichtung (12) angeordnete Auswerfeinrichtung zum Auswerfen fehlgelagerter Vorformlinge (1) vorgesehen ist.

10. Vereinzelungsvorrichtung nach Anspruch 9, **dadurch gekennzeichnet, dass** zumindest eine Auswerfeinrichtung eine Blasdüse (15) umfasst, bevorzugt durch eine Blasdüse gebildet ist.

11. Vereinzelungsvorrichtung nach Anspruch 9 oder 10, **dadurch gekennzeichnet, dass** die Lagendetektionseinrichtung (6) und die Auswerfeinrichtung signalwirkend mit einer Steuervorrichtung verbunden sind.

12. Blasanordnung mit einer Blasmaschine zum Blasumformen von Vorformlingen (1) zu Behältern und einer der Blasmaschine vorgeschalteten Transportvorrichtung, wobei die Transportvorrichtung eine Vereinzelungsvorrichtung nach einem der vorangegangenen Ansprüche aufweist.

13. Blasanordnung nach Anspruch 12, wobei die Vereinzelungsvorrichtung an einen Steigförderer anschließt.

14. Verfahren zum Betreiben einer Vereinzelungsvorrichtung nach einem der Ansprüche 1 bis 11, wobei ein Vorformling (1, 1a) zugeführt und im Zuge eines Transports entlang der Förderrichtung (F) in der Fördergasse (2) ausgerichtet wird und wobei die Lagendetektionseinrichtung (6) eine Fehlausrichtung des Vorformlings (1) durch Verschwenken des Hebelarms (7) detektiert.

15. Verfahren nach Anspruch 14, wobei ein Verschwenken des Hebelarms (7) durch Anschlagen des Vorformlings (1, 1a) an einem an dem Hebelarm (7) angeordneten Endabschnitt (10) bewirkt wird.

16. Verfahren nach Anspruch 15, wobei der Endabschnitt (10) jeweils an Abstandszähnen (9) eines rotierbar an dem Hebelarm (7) angeordneten Zahnkranzes (8) gebildet sind, welche im Falle einer Sollausrichtung in den Vorformling (1, 1a) eingreifen und im Falle einer Fehlausrichtung an eine Außenwandung des Vorformlings (1, 1a) anschlagen.

17. Verfahren nach einem der Ansprüche 14 bis 16, wobei der Hebelarm (7) im Zuge des Verschwenkens einen Strahlengang (11) der Sensoranordnung (12) blockiert oder freigibt, und wobei die Sensoranordnung (12) im Zuge dessen ein Signal erzeugt.

18. Verfahren nach Anspruch 17, wobei auf Basis des erzeugten Signals der Vorformling (1, 1a) ausgeworfen, insbesondere ausgeblasen, wird.
